# EUROPEAN PATENT APPLICATION

(11) **EP 4 561 154 A1**
(43) Date of publication of application: **28.05.2025**
(21) Application number: 22951522.6
(22) Date of filing: 20.07.2022
(51) Int. Cl.: H04W 24/08

(54) **INFORMATION INDICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Stöckeler, Ferdinand
(86) International application number: PCT/CN2022/106899
(87) International publication number: WO 2024/016245

(57) **Abstract**

Provided in the present disclosure are an information indication method and apparatus, and a device and a storage medium. The method comprises: acquiring capability information reported by a terminal device, wherein the capability information indicates whether the terminal device supports the reporting of a measurement gap requirement of a frequency band; and in response to the capability information indicating that the terminal device supports the reporting of the measurement gap requirement of the frequency band, sending indication information to the terminal device, wherein the indication information is used for indicating to the terminal device that target frequency band information of the measurement gap requirement is required to be reported. By means of the method in the present disclosure, a limitation on measurement gap requirement reporting is overcome, and the flexibility of measurement gap requirement reporting is improved.

## Description

### TECHNICAL FIELD

The present disclosure relates to the field of communications technologies, and in particular, to an information indication method and apparatus, a device, and a storage medium.

### BACKGROUND

In a communication system, a terminal usually needs to report a measurement gap requirement for a frequency band to a network device, so that the network device may configure a measurement gap for the frequency band based on the measurement gap requirement for the frequency band. When the measurement gap requirement for the frequency band is reported, measurement gap requirement reporting is usually performed between inter-radio access type new radio (Inter-RAT NR) and inter-radio access type long term evolution (Inter-RAT LTE). That is, the terminal connected to an NR base station reports the measurement gap requirement for an LTE frequency band to the NR base station, or the terminal connected to an LTE base station reports the measurement gap requirement for an NR frequency band to the LTE base station.

In related art, a terminal capability of nr-NeedForGap-Reporting is introduced in R16, and the capability is used to indicate whether the terminal connected to the LTE base station or the NR base station supports reporting the measurement gap requirement for an NR frequency band to be detected. In R17, a terminal capability of ncsg-MeasGap-r17 is introduced, and the capability is used to indicate whether the terminal connected to the NR base station supports reporting the measurement gap requirement for the NR and LTE frequency bands to be tested. For a terminal supporting NeedForGap, the inter-RAT measurement gap requirement reporting supported by the terminal includes only: reporting the measurement gap requirement for the NR frequency band to the LTE base station. For a terminal supporting the ncsg-MeasGap, the inter-RAT measurement gap requirement reporting supported by the terminal includes only: reporting the measurement gap requirement for the LTE frequency band to the NR base station.

The method for reporting the inter-RAT measurement gap requirement in the related art is relatively large in limitation and poor in flexibility.

### SUMMARY

An information indication method, apparatus, device, and storage medium provided in the present disclosure solve the technical problems of large limitation and poor flexibility of the method for reporting the inter-RAT measurement gap requirement in the related art.

According to a first aspect, embodiments of the present disclosure provide an information indication method. The method is performed by a network device, and includes:
acquiring capability information reported by a terminal, in which the capability information indicates whether the terminal supports reporting a measurement gap requirement for a frequency band; and
sending, in response to the capability information indicating that the terminal supports reporting the measurement gap requirement for the frequency band, indication information to the terminal, in which the indication information is used to indicate target frequency band information for which the terminal needs to report the measurement gap requirement.

In the present disclosure, the information indication method is provided, in which the capability information includes first capability information used to indicate whether the terminal supports reporting a first measurement gap requirement for the frequency band, and/or second capability information used to indicate whether the terminal supports reporting a second measurement gap requirement for the frequency band. The target frequency band information includes an NR target frequency band or an LTE target frequency band. It can be seen that in the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting NeedForGap capability) or supports reporting the second measurement gap requirement for the frequency band (that is, supporting NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

According to a second aspect, embodiments of the present disclosure provide an information indication method. The method is performed by a terminal, and includes:
reporting capability information to a network device, in which the capability information indicates whether the terminal supports reporting a measurement gap requirement for a frequency band; and
receiving, in response to the capability information indicating that the terminal supports reporting the measurement gap requirement for the frequency band, indication information sent by the network device, in which the indication information indicates target frequency band information for which the terminal needs to report the measurement gap requirement.

According to a third aspect, embodiments of the present disclosure provide a communication apparatus. The apparatus is configured in a network device, and includes:
a transceiver module, configured to acquire capability information reported by a terminal, in which the capability information indicates whether the terminal supports reporting a measurement gap requirement for a frequency band; and
the transceiver module being further configured to send indication information to the terminal in response to the capability information indicating that the terminal supports reporting the measurement gap requirement for the frequency band, in which the indication information is used to indicate target frequency band information for which the terminal needs to report the measurement gap requirement.

According to a fourth aspect, embodiments of the present disclosure provide a communication apparatus. The apparatus is configured in a terminal, and includes:
a transceiver module, configured to report capability information to a network device, in which the capability information indicates whether the terminal supports reporting a measurement gap requirement for a frequency band; and
the transceiver module being further configured to receive indication information sent by the network device in response to the capability information indicating that the terminal supports reporting the measurement gap requirement for the frequency band, in which the indication information indicates target frequency band information for which the terminal needs to report the measurement gap requirement.

According to a fifth aspect, embodiments of the present disclosure provide a communication apparatus. The communication apparatus includes a processor, and when the processor invokes a computer program in a memory, the method according to the first aspect is performed.

According to a sixth aspect, embodiments of the present disclosure provide a communication apparatus. The communication apparatus includes a processor, and when the processor invokes a computer program in a memory, the method according to the second aspect is performed.

According to a seventh aspect, embodiments of the present disclosure provide a communication apparatus. The communication apparatus includes a processor and a memory. The memory stores a computer program. The processor executes the computer program stored in the memory, so that the communication apparatus performs the method according to the first aspect.

According to an eighth aspect, embodiments of the present disclosure provide a communication apparatus. The communication apparatus includes a processor and a memory. The memory stores a computer program. The processor executes the computer program stored in the memory, so that the communication apparatus performs the method according to the second aspect.

According to a ninth aspect, embodiments of the present disclosure provide a communication apparatus. The communication apparatus includes a processor and an interface circuit. The interface circuit is configured to receive code instructions and transmit the code instructions to the processor, and the processor is configured to run the code instructions to cause the apparatus to perform the method according to the first aspect.

According to a tenth aspect, embodiments of the present disclosure provide a communication apparatus. The communication apparatus includes a processor and an interface circuit. The interface circuit is configured to receive code instructions and transmit the code instructions to the processor, and the processor is configured to run the code instructions to cause the apparatus to perform the method according to the second aspect.

According to an eleventh aspect, embodiments of the present disclosure provide a communication system. The system includes the communications apparatus according to the third aspect and the communications apparatus in the fourth aspect, or the system includes the communications apparatus according to the fifth aspect and the communications apparatus according to the sixth aspect, or the system includes the communications apparatus according to the seventh aspect and the communications apparatus according to the eighth aspect, or the system includes the communications apparatus according to the ninth aspect and the communications apparatus according to the tenth aspect.

According to a twelfth aspect, embodiments of the present disclosure provide a computer-readable storage medium for storing instructions used by the network device and/or the terminal. When the instructions are executed, the network device is caused to perform the method according to the first aspect, and/or the terminal is caused to perform the method according to the second aspect.

According to a thirteenth aspect, the present disclosure further provides a computer program product including a computer program. When the computer program product runs on a computer, the computer is enabled to perform the method according to any one of the first aspect to the second aspect.

According to a fourteenth aspect, the present disclosure provides a chip system. The chip system includes at least one processor and an interface, configured to support a network device in implementing functions involved in the method in the first aspect, and/or support a terminal to implement functions involved in the method according to the second aspect, for example, determining or processing at least one of data and information involved in the foregoing methods. In a possible design, the chip system further includes a memory, and the memory is configured to store a computer program and data that are necessary for a source secondary node. The chip system may include a chip, or may include a chip and another discrete component.

According to a fifteenth aspect, the present disclosure provides a computer program. When the computer program runs on a computer, the computer is caused to perform the method according to any one of the first aspect or the second aspect.

### BRIEF DESCRIPTION OF THE DRAWINGS

The above and/or additional aspects and advantages of the present disclosure will become apparent and more readily appreciated from the following descriptions made with reference to the accompanying drawings.
FIG. 1 is a schematic architectural diagram of a communication system according to an embodiment of the present disclosure.
FIG. 2 is a schematic flowchart of an information indication method according to another embodiment of the present disclosure.
FIG. 3 is a schematic flowchart of an information indication method according to yet another embodiment of the present disclosure.
FIG. 4 is a schematic flowchart of an information indication method according to yet another embodiment of the present disclosure.
FIG. 5 is a schematic flowchart of an information indication method according to yet another embodiment of the present disclosure.
FIG. 6 is a schematic flowchart of an information indication method according to yet another embodiment of the present disclosure.
FIG. 7 is a schematic flowchart of an information indication method according to yet another embodiment of the present disclosure.
FIG. 8 is a schematic flowchart of an information indication method according to yet another embodiment of the present disclosure.
FIG. 9 is a schematic flowchart of an information indication method according to yet another embodiment of the present disclosure.
FIG. 10 is a schematic flowchart of an information indication method according to yet another embodiment of the present disclosure.
FIG. 11 is a schematic flowchart of an information indication method according to yet another embodiment of the present disclosure.
FIG. 12 is a schematic flowchart of an information indication method according to yet another embodiment of the present disclosure.
FIG. 13 is a schematic flowchart of an information indication method according to yet another embodiment of the present disclosure.
FIG. 14 is a schematic structural diagram of a communication apparatus according to an embodiment of the present disclosure.
FIG. 15 is a schematic structural diagram of a communication apparatus according to another embodiment of the present disclosure.
FIG. 16 is a block diagram of a communication apparatus according to an embodiment of the present disclosure.
FIG. 17 is a schematic structural diagram of a chip according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with the embodiments of the present disclosure. Instead, they are merely examples of apparatuses and methods consistent with some aspects of the embodiments of the present disclosure as detailed in the appended claims.

The terms used in the embodiments of the present disclosure are merely for the purpose of describing particular embodiments, and are not intended to limit the embodiments of the present disclosure. The singular forms "a" and "the" used in the embodiments of the present disclosure and the appended claims are also intended to include plural forms, unless the context clearly indicates other meanings. It should also be understood that the term "and/or" as used herein refers to and includes any or all possible combinations of one or more associated listed items.

It should be understood that although terms "first", "second", "third", etc., may be used in the embodiments of the present disclosure to describe various information, these information should not be limited to these terms. These terms are only used to distinguish the same type of information from each other. For example, without departing from the scope of the embodiments of the present disclosure, the first information may also be referred to as second information, and similarly, the second information may also be referred to as first information. Depending on the context, the words "if" as used herein may be interpreted as "when", or "in a case that", or "in response to determining that".

Embodiments of the present disclosure are described in detail below, and examples of the embodiments are shown in the accompanying drawings, in which the same or similar reference numerals refer to the same or similar elements throughout. The embodiments described below with reference to the drawings are exemplary and are intended to explain the present disclosure and are not to be construed as limiting the present disclosure.

For ease of understanding, terms involved in the present disclosure are first described.

### 1 a measurement gap

A terminal may be configured to perform a measurement in a time period, and in this time period, the UE does not perform data transceiving of a serving cell.

In order to better understand an information indication method disclosed in the embodiments of the present disclosure, the following first describes a communication system to which the embodiments of the present disclosure are applicable.

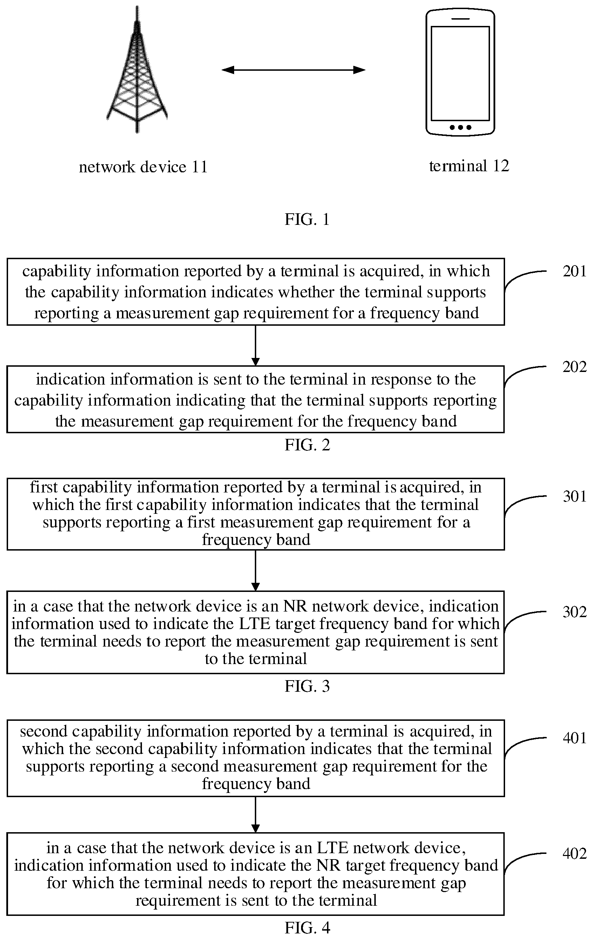

FIG. 1 is a schematic architectural diagram of a communication system according to an embodiment of the present disclosure. The communication system may include, but is not limited to, a network device, a relay device, and a terminal. The quantity and form of devices shown in FIG. 1 are only used for example and do not constitute a limitation on the embodiments of the present disclosure, and the actual application may include two or more network devices, two or more terminals. The communication system shown in FIG. 1 includes one network device 11 and one terminal 12.

It should be noted that the technical solutions of the embodiments of the present disclosure are applicable to various communication systems. For example, a long term evolution (LTE) system, a 5th generation (5G) mobile communication system, a 5G new radio (NR) system, another future new mobile communication system, or the like.

The network device 11 in the embodiments of the present disclosure is an entity for transmitting or receiving a signal on a network side. For example, the network device 11 may be an evolved NodeB (eNB), a transmission reception point (TRP), a next generation NodeB (gNB) in an NR system, a base station in another future mobile communication system, or an access node in a wireless fidelity (WiFi) system. A specific technology and a specific device form used by the network device are not limited in the embodiments of the present disclosure. The network device provided in the embodiments of the present disclosure may be composed of a central unit (CU) and a distributed unit (DU). The CU may also be referred to as a control unit. The network device, for example, a protocol layer of the base station, may be split by using a CU-DU structure, functions of part of the protocol layer are centralized controlled in the CU, and functions of some remaining or all of the protocol layer are distributed in the DU, and the DU is centralized controlled by the CU.

The terminal 12 in the embodiments of the present disclosure may be an entity for receiving or transmitting a signal on a user side, for example, a mobile phone. The terminal may also be referred to as a terminal, user equipment (UE), a mobile station (MS), a mobile terminal (MT), or the like. The terminal may be a communication enabled car, a smart car, a mobile phone, a wearable device, a Pad, a computer with wireless transmission and reception capability, a virtual reality (VR) terminal, an augmented reality (AR) terminal, a wireless terminal in industrial control, a wireless terminal in autonomous driving, a wireless terminal in remote medical surgery, a wireless terminal in a smart grid, a wireless terminal in transportation safety, and a wireless terminal in a smart city, a wireless terminal in a smart home, etc. A specific technology and a specific device form used by the terminal are not limited in the embodiments of the present disclosure.

It may be understood that the communication system described in the embodiments of the present disclosure is intended to describe the technical solutions of the embodiments of the present disclosure more clearly, which does not constitute a limitation of the technical solutions provided by the embodiments of the present disclosure. A person of ordinary skill in the art may know that, with the evolution of the system architecture and the appearance of new service scenarios, the technical solutions provided in the embodiments of the present disclosure are also applicable to similar technical problems.

The information indication method, apparatus, device, and storage medium provided in the embodiments of the present disclosure are described in detail below with reference to the accompanying drawings.

FIG. 2 is a schematic flowchart of an information indication method according to an embodiment of the present disclosure. The method is performed by a network device, as shown in FIG. 2, the information indication method may include the following steps.

Step 201: capability information reported by a terminal is acquired, in which the capability information indicates whether the terminal supports reporting a measurement gap requirement for a frequency band.

In an embodiment of the present disclosure, the capability information includes first capability information and/or second capability information.

In an embodiment of the present disclosure, the first capability information indicates whether the terminal supports reporting a first measurement gap requirement for the frequency band, and the second capability information indicates whether the terminal supports reporting a second measurement gap requirement for the frequency band.

The first measurement gap requirement is a requirement for a measurement gap when the terminal measures the frequency band, that is, whether the measurement gap is required when the terminal measures the frequency band. For example, the first measurement gap requirement may be specifically similar to a NeedForGap capability of the terminal.

The second measurement gap requirement is a requirement for a measurement gap and a network controlled small gap (NCSG) when the terminal measures the frequency band, that is, whether the measurement gap is required and whether the NCSG is required when the terminal measures the frequency band. For example, the second measurement gap requirement may be specifically similar to a NeedForNCSG capability of the terminal.

The foregoing frequency band may include an NR frequency band and an LTE frequency band, and the foregoing network device may be an LTE network device or an NR network device.

Compared with the prior art that the NeedForGap capability only indicates whether the terminal supports reporting the measurement gap requirement for the NR frequency band, and the NeedForNCSG capability only supports indicating to the NR network device whether the terminal supports reporting the measurement gap requirement for the target frequency band, in the present disclosure, the NeedForGap capability and the NeedForNCSG capability are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Therefore, no matter the terminal supports the NeedForCap capability or the NeedForNCSG capability, the LTE network device or the NR network device can configure the terminal for reporting the measurement gap requirement for the NR target frequency band or for the LTE target frequency band, and thus overcoming the limitations of reporting the measurement gap requirement and improving the flexibility of reporting the measurement interval requirement.

Step 202: indication information is sent to the terminal in response to the capability information indicating that the terminal supports reporting the measurement gap requirement for the frequency band.

The capability information indicating that the terminal supports reporting the measurement gap requirement for the frequency band may be understood as that the first capability information indicates that the terminal supports reporting a first measurement gap requirement for the frequency band, or the second capability information indicates that the terminal supports reporting a second measurement gap requirement for the frequency band.

In an embodiment of the present disclosure, the indication information is used to indicate target frequency band information for which the terminal needs to report the measurement gap requirement, and the target frequency band includes an NR target frequency band or an LTE target frequency band.

In an embodiment of the present disclosure, when the terminal supports reporting the first measurement gap requirement for the frequency band, the network device sends the indication information to the terminal to instruct the terminal to report the measurement gap requirement for the NR target frequency band or the LTE target frequency band. In other words, in an embodiment of the present disclosure, when the terminal supports reporting the first measurement gap requirement for the frequency band (that is, when the terminal supports NeedForGap), in addition to instructing the terminal to report the measurement gap requirement for the NR target frequency band as in the related art, the network device may further instruct the terminal to report the measurement gap requirement for the LTE target frequency band. That is, the terminal supporting the NeedForGap capability can report the measurement gap requirement for the NR target frequency band to the LTE network device as can be implemented in the related art, it can be further extended to implement reporting the measurement gap requirement for the LTE target frequency band to the NR network device, thereby overcoming the limitations of reporting the measurement gap requirement, and improving the flexibility of reporting the measurement gap requirement.

In an embodiment of the present disclosure, when the terminal supports reporting the second measurement gap requirement for the frequency band, the network device may also send the indication information to the terminal to instruct the terminal to report the measurement gap requirement for the NR target frequency band or the LTE target frequency band. In other words, in an embodiment of the present disclosure, when the terminal supports reporting the second measurement gap requirement for the frequency band (that is, when the terminal supports the NeedForNCSG), in addition to instructing the terminal to report the measurement gap requirement for the LTE target frequency band as in the related art, the network device may further instruct the terminal to report the measurement gap requirement for the NR target frequency band. That is, the terminal supporting the NeedForNCSG capability can report the measurement gap requirement for the LTE target frequency band to the NR network device as can be implemented in the related art, it can be further extended to report the measurement gap requirement for the NR target frequency band to the LTE network device, thereby overcoming the limitations of reporting the measurement gap requirement, and improving the flexibility of reporting the measurement gap requirement.

In addition, in an embodiment of the present disclosure, the network device may send the indication information to the terminal through a Radio Resource Control (RRC) message.

In summary, in the information indication method provided in the present disclosure, the network device can acquire the first capability information and/or the second capability information reported by the terminal; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the indication information is sent to the terminal, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

FIG. 3 is a schematic flowchart of an information indication method according to an embodiment of the present disclosure. The method is performed by a network device, as shown in FIG. 3, the information indication method may include the following steps.

Step 301: first capability information reported by a terminal is acquired, in which the first capability information indicates that the terminal supports reporting a first measurement gap requirement for a frequency band.

For detailed descriptions of step 301, reference may be made to the description of the foregoing embodiments, and details are not described herein again in the embodiments of the present disclosure.

Step 302: in a case that the network device is an NR network device, indication information used to indicate the LTE target frequency band for which the terminal needs to report the measurement gap requirement is sent to the terminal.

In an embodiment of the present disclosure, the indication information that is sent by the NR network device to the terminal and is used to indicate the LTE target frequency band for which the terminal needs to report the measurement gap requirement may include the following codes.

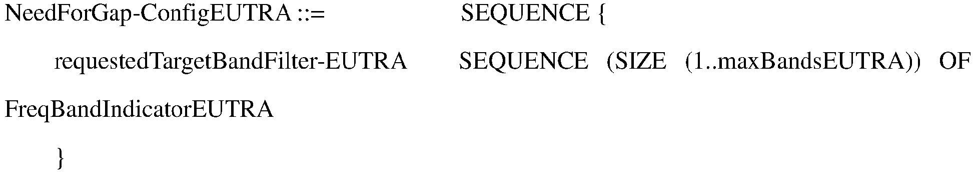

It can be known from the codes that, the "requestedTargetBandFilter-EUTRA" in the NeedForGap-ConfigEUTRA specifically includes frequency band information of the LTE target frequency band indicated by the NR network device. Then, the terminal may subsequently determine the LTE target frequency band based on the above codes, and report the measurement gap requirement for the LTE target frequency band to the network device.

In summary, in the information indication method provided in the present disclosure, the network device can acquire the first capability information and/or the second capability information reported by the terminal; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the indication information is sent to the terminal, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

FIG. 4 is a schematic flowchart of an information indication method according to an embodiment of the present disclosure. The method is performed by a network device, as shown in FIG. 4, the information indication method may include the following steps.

Step 401: second capability information reported by a terminal is acquired, in which the second capability information indicates that the terminal supports reporting a second measurement gap requirement for the frequency band.

For detailed descriptions of step 401, reference may be made to the description of the foregoing embodiments, and details are not described herein again in the embodiments of the present disclosure.

Step 402: in a case that the network device is an LTE network device, indication information used to indicate the NR target frequency band for which the terminal needs to report the measurement gap requirement is sent to the terminal.

In an embodiment of the present disclosure, the indication information that is sent by the LTE network device to the terminal and is used to indicate the NR target frequency band for which the terminal needs to report the measurement gap requirement may include the following codes.

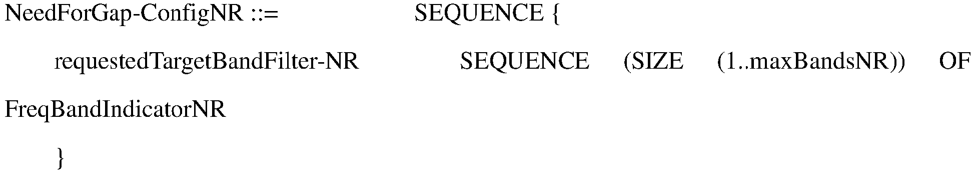

It can be known from the above codes that, the "requestedTargetBandFilter-NR" in the NeedForGap-ConfigNR specifically includes frequency band information of the NR target frequency band indicated by the LTE network device. Then, the terminal may subsequently determine the NR target frequency band based on the above codes, and report the measurement gap requirement for the NR target frequency band to the network device.

In summary, in the information indication method provided in the present disclosure, the network device can acquire the first capability information and/or the second capability information reported by the terminal; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the indication information is sent to the terminal, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement..

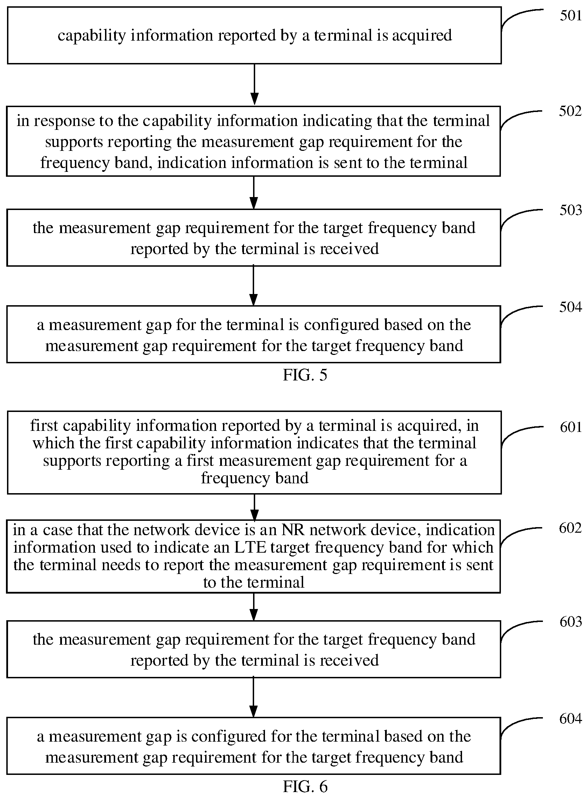

FIG. 5 is a schematic flowchart of an information indication method according to an embodiment of the present disclosure. The method is performed by a network device, as shown in FIG. 5, the information indication method may include the following steps.

Step 501: capability information reported by a terminal is acquired.

For detailed descriptions of step 501, reference may be made to the description of the foregoing embodiments, and details are not described herein again in the embodiments of the present disclosure.

Step 502: in response to the capability information indicating that the terminal supports reporting the measurement gap requirement for the frequency band, indication information is sent to the terminal, in which the indication information indicates a target frequency band for which the terminal needs to report the measurement gap requirement, and the target frequency band includes an NR target frequency band or an LTE target frequency band.

For detailed descriptions of steps 501 to 502, reference may be made to the descriptions of the foregoing embodiments.

Step 503: the measurement gap requirement for the target frequency band reported by the terminal is received.

In an embodiment of the present disclosure, the network device may receive the measurement gap requirement for the target frequency band reported by the terminal through an RRC message.

Step 504: a measurement gap for the terminal is configured based on the measurement gap requirement for the target frequency band.

The detailed description of steps 503 to 504 will be described in the following embodiments.

In summary, in the information indication method provided in the present disclosure, the network device can acquire the first capability information and/or the second capability information reported by the terminal; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the indication information is sent to the terminal, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

**FIG.** 6 is a schematic flowchart of an information indication method according to an embodiment of the present disclosure. The method is performed by a network device, as shown in FIG. 6, the information indication method may include the following steps.

Step 601: first capability information reported by a terminal is acquired, in which the first capability information indicates that the terminal supports reporting a first measurement gap requirement for a frequency band.

For detailed descriptions of step 601, reference may be made to the description of the foregoing embodiments, and details are not described herein again in the embodiments of the present disclosure.

Step 602: in a case that the network device is an NR network device, indication information used to indicate an LTE target frequency band for which the terminal needs to report the measurement gap requirement is sent to the terminal.

For detailed descriptions of steps 601 to 602, reference may be made to the descriptions of the foregoing embodiments.

Step 603: the measurement gap requirement for the target frequency band reported by the terminal is received.

**In** an embodiment of the present disclosure, the measurement gap requirement for the target frequency band may include any one of:
need for a measurement gap;
no need for a measurement gap; or
**no** need for a measurement gap and no need for an interruption of communication with a current serving cell during a measurement.

For example, in an embodiment of the present disclosure, the measurement gap requirement for the target frequency band reported by the terminal may include the following codes.

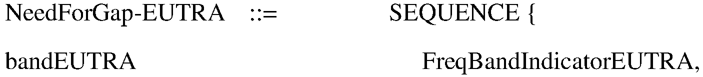

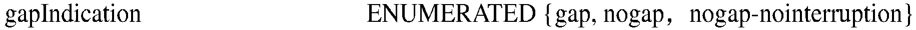

The measurement gap requirement for the target frequency band is included in the "gapIndication" in NeedForGap-EUTRA in the codes. A measurement gap requirement for the target frequency band indicated by the "gap" in the codes is that a measurement gap is needed; a measurement gap requirement for the target frequency band indicated by the "nogap" in the codes is that no measurement gap is needed; and a measurement gap requirement for the target frequency band indicated by the "nogap-nointerruption" in the codes is that no measurement gap is needed and the communication with the current serving cell does not need to be interrupted during the measurement.

Step 604: a measurement gap is configured for the terminal based on the measurement gap requirement for the target frequency band.

In an embodiment of the present disclosure, the method for configuring the measurement gap for the terminal based on the measurement gap requirement for the target frequency band may mainly include:
if the measurement gap requirement for the target frequency band reported by the terminal in step 603 is no need for a measurement gap, or no need for a measurement gap and no need for an interruption of communication with a current serving cell during a measurement, the network device does not configure the measurement gap corresponding to the target frequency band to the terminal; if the measurement gap requirement for the target frequency band reported by the terminal in step 603 is need for a measurement gap, the network device configures the measurement gap corresponding to the target frequency band to the terminal.

In summary, in the information indication method provided in the present disclosure, the network device can acquire the first capability information and/or the second capability information reported by the terminal; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the indication information is sent to the terminal, in which the indication information indicates the target frequency band for which the terminal needs to report the measurement gap requirement, and the target frequency band includes the NR target frequency band or the LTE target frequency band.

**It** can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

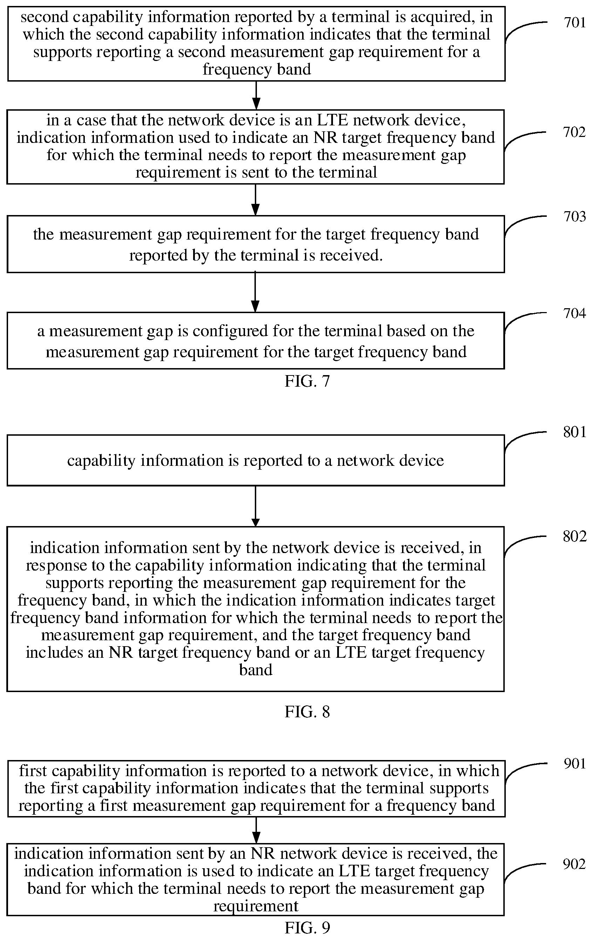

FIG. 7 is a schematic flowchart of an information indication method according to an embodiment of the present disclosure. The method is performed by a network device, as shown in FIG. 7, the information indication method may include the following steps.

Step 701: second capability information reported by a terminal is acquired, in which the second capability information indicates that the terminal supports reporting a second measurement gap requirement for a frequency band.

For detailed descriptions of step 701, reference may be made to the description of the foregoing embodiments, and details are not described herein again in the embodiments of the present disclosure.

Step 702: in a case that the network device is an LTE network device, indication information used to indicate an NR target frequency band for which the terminal needs to report the measurement gap requirement is sent to the terminal.

For detailed descriptions of steps 701 to 702, reference may be made to the descriptions of the foregoing embodiments.

Step 703: the measurement gap requirement for the target frequency band reported by the terminal is received.

In an embodiment of the present disclosure, the measurement gap requirement for the target frequency band may include any one of:
need for a measurement gap;
need for an NCSG;
no need for a measurement gap and no need for an NCSG; or
no need for an NCSG and no need for an interruption of communication with a current serving cell during a measurement.

For example, in an embodiment of the present disclosure, the measurement gap requirement for the target frequency band reported by the terminal may include the following codes.

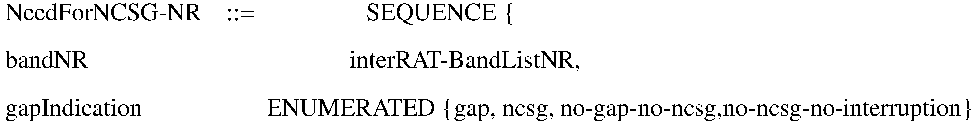

The measurement gap requirement for the target frequency band is included in the "gapIndication" in NeedForNCSG-NR in the above codes. A measurement gap requirement for the target frequency band indicated by the "gap" in the above codes is that a measurement gap is needed; a measurement gap requirement for the target frequency band indicated by the "NCSG" in the above codes is that an NCSG is needed; a measurement gap requirement for the target frequency band indicated by the "no-gap-no-ncsg" in the above codes is that no measurement gap is needed and no NCSG is needed; and a measurement gap requirement for the target frequency band indicated by "no-ncsg-no-interruption" in the above codes is that no measurement gap and no NCSG is needed and there is no need to interrupt the communication with the current serving cell during the measurement.

Step 704: a measurement gap is configured for the terminal based on the measurement gap requirement for the target frequency band.

In an embodiment of the present disclosure, the method for configuring the measurement gap for the terminal based on the measurement gap requirement for the target frequency band may mainly include:
if the measurement gap requirement for the target frequency band reported by the terminal in step 703 is need for a measure gap, the network device configures the measurement gap corresponding to the target frequency band to the terminal; if the measurement gap requirement for the target frequency band reported by the terminal in step 703 is need for an NCSG, the network device configures the NCSG corresponding to the target frequency band to the terminal; if the measurement gap requirement for the target frequency band reported by the terminal in step 703 is no need for a measurement gap and no need for an NCSG, the network device does not configure the measurement gap and the NCSG corresponding to the target frequency band to the terminal; if the measurement gap requirement for the target frequency band reported by the terminal in step 703 is no need for an NCSG and no need for an interruption of communication with a current serving cell during a measurement, the network device does not configure the measurement gap and the NCSG corresponding to the target frequency band to the terminal.

In summary, in the information indication method provided in the present disclosure, the network device can acquire the first capability information and/or the second capability information reported by the terminal; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the indication information is sent to the terminal, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

FIG. 8 is a schematic flowchart of an information indication method according to an embodiment of the present disclosure. The method is performed by a terminal, as shown in FIG. 8, the information indication method may include the following steps.

Step 801: capability information is reported to a network device.

Step 802: indication information sent by the network device is received, in response to the capability information indicating that the terminal supports reporting the measurement gap requirement for the frequency band, in which the indication information indicates target frequency band information for which the terminal needs to report the measurement gap requirement, and the target frequency band includes an NR target frequency band or an LTE target frequency band.

For detailed descriptions of steps 801 to 802, reference may be made to the descriptions of the foregoing embodiments.

In summary, in the information indication method provided in the present disclosure, the terminal can report the first capability information and/or the second capability information to the network device; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the terminal receives the indication information sent by the network device, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

FIG. 9 is a schematic flowchart of an information indication method according to an embodiment of the present disclosure. The method is performed by a terminal, as shown in FIG. 9, the information indication method may include the following steps.

Step 901: first capability information is reported to a network device, in which the first capability information indicates that the terminal supports reporting a first measurement gap requirement for a frequency band.

Step 902: indication information sent by an NR network device is received, the indication information is used to indicate an LTE target frequency band for which the terminal needs to report the measurement gap requirement.

For detailed descriptions of steps 901 to 902, reference may be made to the descriptions of the foregoing embodiments.

In summary, in the information indication method provided in the present disclosure, the terminal can report the first capability information and/or the second capability information to the network device; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the terminal receives the indication information sent by the network device, in which the indication information indicates the target frequency band for which the terminal needs to report the measurement gap requirement, and the target frequency band includes the NR target frequency band or the LTE target frequency band.

**It** can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

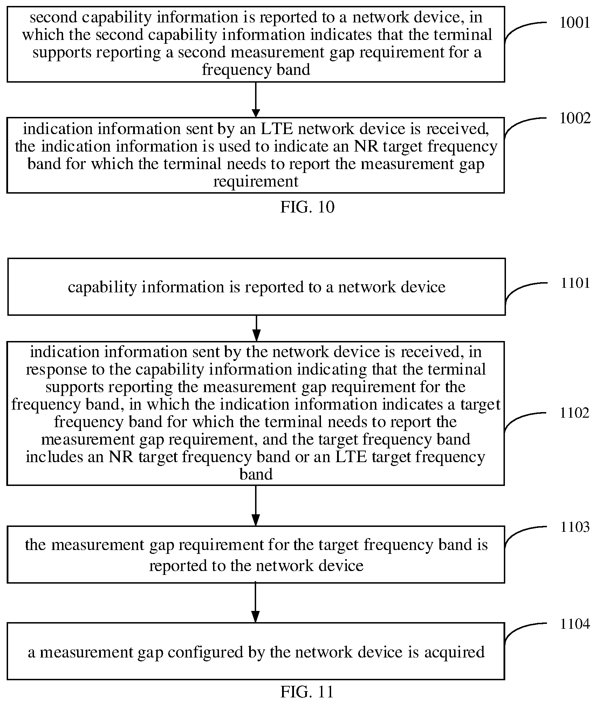

FIG. 10 is a schematic flowchart of an information indication method according to an embodiment of the present disclosure. The method is performed by a terminal, as shown in FIG. 10, the information indication method may include the following steps.

Step 1001: second capability information is reported to a network device, in which the second capability information indicates that the terminal supports reporting a second measurement gap requirement for a frequency band.

Step 1002: indication information sent by an LTE network device is received, the indication information is used to indicate an NR target frequency band for which the terminal needs to report the measurement gap requirement.

For detailed descriptions of steps 1001 to 1002, reference may be made to the descriptions of the foregoing embodiments.

In summary, in the information indication method provided in the present disclosure, the terminal can report the first capability information and/or the second capability information to the network device; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the terminal receives the indication information sent by the network device, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

FIG. 11 is a schematic flowchart of an information indication method according to an embodiment of the present disclosure. The method is performed by a terminal, as shown in FIG. 11, the information indication method may include the following steps.

Step 1101: capability information is reported to a network device.

Step 1102: indication information sent by the network device is received, in response to the capability information indicating that the terminal supports reporting the measurement gap requirement for the frequency band, in which the indication information indicates a target frequency band for which the terminal needs to report the measurement gap requirement, and the target frequency band includes an NR target frequency band or an LTE target frequency band.

Step 1103: the measurement gap requirement for the target frequency band is reported to the network device.

Step 1104: a measurement gap configured by the network device is acquired.

For detailed descriptions of steps 1101 to 1104, reference may be made to the descriptions of the foregoing embodiments.

In summary, in the information indication method provided in the present disclosure, the terminal can report the first capability information and/or the second capability information to the network device; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the terminal receives the indication information sent by the network device, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

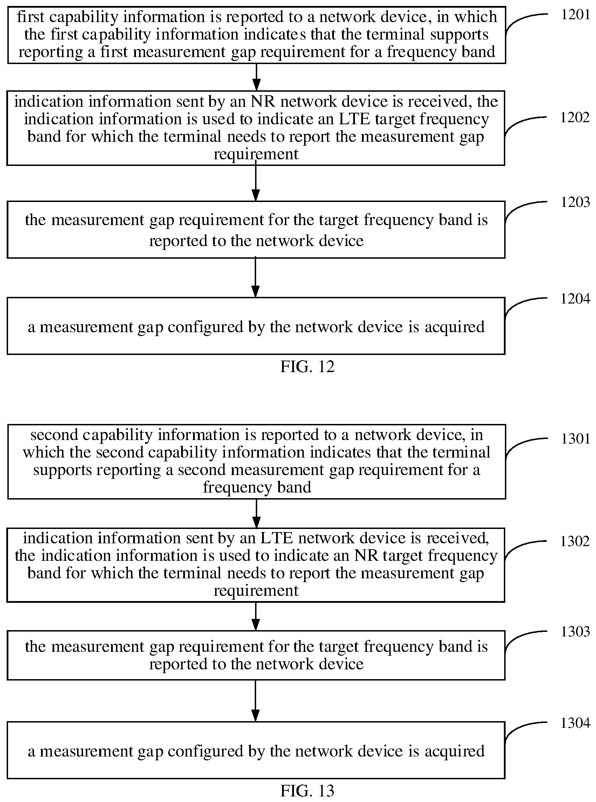

FIG. 12 is a schematic flowchart of an information indication method according to an embodiment of the present disclosure. The method is performed by a terminal, as shown in FIG. 12, the information indication method may include the following steps.

Step 1201: first capability information is reported to a network device, in which the first capability information indicates that the terminal supports reporting a first measurement gap requirement for a frequency band.

Step 1202: indication information sent by an NR network device is received, the indication information is used to indicate an LTE target frequency band for which the terminal needs to report the measurement gap requirement.

Step 1203: the measurement gap requirement for the target frequency band is reported to the network device.

Step 1204: a measurement gap configured by the network device is acquired.

For detailed descriptions of steps 1201 to 1204, reference may be made to the descriptions of the foregoing embodiments.

In summary, in the information indication method provided in the present disclosure, the terminal can report the first capability information and/or the second capability information to the network device; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the terminal receives the indication information sent by the network device, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

FIG. 13 is a schematic flowchart of an information indication method according to an embodiment of the present disclosure. The method is performed by a terminal, as shown in FIG. 12, the information indication method may include the following steps.

Step 1301: second capability information is reported to a network device, in which the second capability information indicates that the terminal supports reporting a second measurement gap requirement for a frequency band.

Step 1302: indication information sent by an LTE network device is received, the indication information is used to indicate an NR target frequency band for which the terminal needs to report the measurement gap requirement.

Step 1303: the measurement gap requirement for the target frequency band is reported to the network device.

Step 1304: a measurement gap configured by the network device is acquired.

For detailed descriptions of steps 1301 to 1304, reference may be made to the descriptions of the foregoing embodiments.

In summary, in the information indication method provided in the present disclosure, the terminal can report the first capability information and/or the second capability information to the network device; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the terminal receives the indication information sent by the network device, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

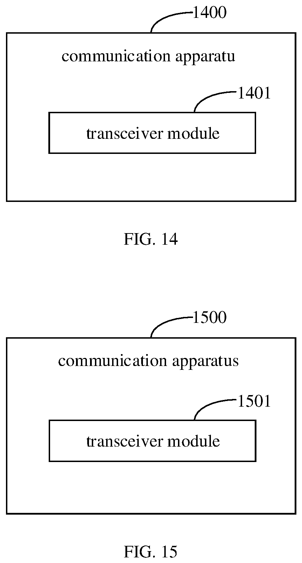

FIG. 14 is a schematic structural diagram of a communication apparatus according to an embodiment of the present disclosure. As shown in FIG. 14, the apparatus includes:
a transceiver module, configured to acquire capability information reported by a terminal, in which the capability information indicates whether the terminal supports reporting a measurement gap requirement for a frequency band; and
the transceiver module being further configured to send indication information to the terminal in response to the capability information indicating that the terminal supports reporting the measurement gap requirement for the frequency band, in which the indication information is used to indicate target frequency band information for which the terminal needs to report the measurement gap requirement.

In summary, in the communication apparatus provided in the embodiments of the present disclosure, the network device can acquire the first capability information and/or the second capability information reported by the terminal; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the indication information is sent to the terminal, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

Optionally, in an embodiment of the present disclosure, the capability information includes at least one of:
first capability information used to indicate whether the terminal supports reporting a first measurement gap requirement for the frequency band; or
second capability information used to indicate whether the terminal supports reporting a second measurement gap requirement for the frequency band..

Optionally, in an embodiment of the present disclosure, the apparatus is further configured to:
receive the measurement gap requirement for the target frequency band reported by the terminal; and
configure a measurement gap for the terminal based on the measurement gap requirement for the target frequency band.

Optionally, in an embodiment of the present disclosure, the first measurement gap requirement is a requirement for a measurement gap;
the second measurement gap requirement is a requirement for a measurement gap and an NCSG.

Optionally, in an embodiment of the present disclosure, in response to acquiring the first capability information reported by the terminal, and the first capability information indicating that the terminal supports reporting the first measurement gap requirement for the frequency band, the transceiver module is configured to:
in a case that the network device is an NR network device, send to the terminal indication information used to indicate the LTE target frequency band for which the terminal needs to report the measurement gap requirement.

Optionally, in an embodiment of the present disclosure, in response to acquiring the second capability information reported by the terminal, and the second capability information indicating that the terminal supports reporting the second measurement gap requirement for the frequency band, the transceiver module is further configured to:
in a case that the network device is an LTE network device, send to the terminal indication information used to indicate the NR target frequency band for which the terminal needs to report the measurement gap requirement.

Optionally, in an embodiment of the present disclosure, in response to acquiring the first capability information reported by the terminal, and the first capability information indicating that the terminal supports reporting the first measurement gap requirement for the frequency band, the measurement gap requirement for the target frequency band reported by the terminal includes any one of:
need for a measurement gap;
no need for a measurement gap; or
no need for a measurement gap and no need for an interruption of communication with a current serving cell during a measurement.

Optionally, in an embodiment of the present disclosure, in response to acquiring the second capability information reported by the terminal, and the second capability information indicating that the terminal supports reporting the second measurement gap requirement for the frequency band, the measurement gap requirement for the target frequency band reported by the terminal includes any one of:
need for a measurement gap;
need for an NCSG;
no need for a measurement gap and no need for an NCSG; or
no need for an NCSG and no need for an interruption of communication with a current serving cell during a measurement.

FIG. 15 is a schematic structural diagram of a communication apparatus according to an embodiment of the present disclosure. As shown in FIG. 15, the apparatus includes:
a transceiver module, configured to report capability information to a network device, in which the capability information indicates whether the terminal supports reporting a measurement gap requirement for a frequency band; and
the transceiver module being further configured to receive indication information sent by the network device, in response to the capability information indicating that the terminal supports reporting the measurement gap requirement for the frequency band, in which the indication information indicates target frequency band information for which the terminal needs to report the measurement gap requirement.

**In** summary, in the communication apparatus provided in the embodiments of the present disclosure, the terminal can report the first capability information and/or the second capability information to the network device; the first capability information indicates whether the terminal supports reporting the first measurement gap requirement for the frequency band; the second capability information indicates whether the terminal supports reporting the second measurement gap requirement for the frequency band; after that, in response to the first capability information indicating that the terminal supports reporting the first measurement gap requirement for the frequency band, or the second capability information indicating that the terminal supports reporting the second measurement gap requirement for the frequency band, the terminal receives the indication information sent by the network device, in which the indication information indicates the target frequency band for which the terminal needs to report the measurement gap requirement, and the target frequency band includes the NR target frequency band or the LTE target frequency band.

It can be seen that, in the embodiments of the present disclosure, the NeedForGap capability (corresponding to the first measurement gap requirement) and the NeedForNCSG capability (corresponding to the second measurement gap requirement) are expanded, so that in addition to the original support capability, the extended NeedForGap capability can be extended to support the indication of whether or not the terminal supports reporting the measurement gap requirement for the LTE frequency band to the NR network device; and in addition to the original support capability, the extended NeedForNCSG capability can also be extended to support the indication of whether or not the terminal supports reporting the measurement gap requirement for the NR frequency band to the LTE network device. Based on this, no matter the terminal supports reporting the first measurement gap requirement for the frequency band (that is, supporting the NeedForGap capability) or supports reporting the second measurement gap requirement for the frequency band (that is, supporting the NeedForNCSG capability), the reporting of the inter-RAT measurement gap requirement that can be supported by the terminal includes: reporting the measurement gap requirement for the LTE target frequency band to the NR network device, and reporting the measurement gap requirement for the NR target frequency band to the LTE network device. Therefore, compared with the related art that "when the terminal supports the NeedForGap capability, the inter-RAT measurement gap requirement reporting supported by the terminal includes only: reporting the measurement gap requirement for the NR frequency band to the LTE base station. When the terminal supports the NeedForNCSG capability, the inter-RAT measurement gap requirement reporting supported by the terminal includes only: reporting the measurement gap requirement for the LTE frequency band to the NR base station", the method of the present disclosure overcomes the limitations of the method for reporting the inter-RAT measurement gap requirement, and improves the flexibility of the method for reporting the inter-RAT measurement gap requirement.

Optionally, in an embodiment of the present disclosure, the capability information includes at least one of:
**first** capability information used to indicate whether the terminal supports reporting a first measurement gap requirement for the frequency band; or
second capability information used to indicate whether the terminal supports reporting a second measurement gap requirement for the frequency band.

Optionally, in an embodiment of the present disclosure, the apparatus further includes:
reporting the measurement gap requirement for the target frequency band to the network device; and
acquiring a measurement gap configured by the network device.

Optionally, in an embodiment of the present disclosure, the first measurement gap requirement is a requirement for a measurement gap;
the second measurement gap requirement is a requirement for a measurement gap and an NCSG.

Optionally, in an embodiment of the present disclosure, in response to reporting the first capability information to the network device, and the first capability information indicating that the terminal supports reporting the first measurement gap requirement for the frequency band, the transceiver module is further configured to:
receive indication information that is sent by an NR network device and is used to indicate the LTE target frequency band for which the terminal needs to report the measurement gap requirement.

Optionally, in an embodiment of the present disclosure, in response to reporting the second capability information to the network device, and the second capability information indicating that the terminal supports reporting the second measurement gap requirement for the frequency band, the transceiver module is further configured to:
receive indication information that is sent by an LTE network device and is used to indicate the NR target frequency band for which the terminal needs to report the measurement gap requirement.

Optionally, in an embodiment of the present disclosure, in response to reporting the first capability information to the network device, and the first capability information indicates that the terminal supports reporting the first measurement gap requirement for the frequency band, the measurement gap requirement for the target frequency band reported by the terminal includes any one of:
need for a measurement gap;
no need for a measurement gap; or
no need for a measurement gap and no need for an interruption of communication with a current serving cell during a measurement.

Optionally, in an embodiment of the present disclosure, in response to reporting the second capability information to the network device, and the second capability information indicating that the terminal supports reporting the second measurement gap requirement for the frequency band, the measurement gap requirement for the target frequency band reported by the terminal includes any one of:
need for a measurement gap;
need for an NCSG;
no need for a measurement gap and no need for an NCSG; or
no need for an NCSG and no need for an interruption of communication with a current serving cell during a measurement.

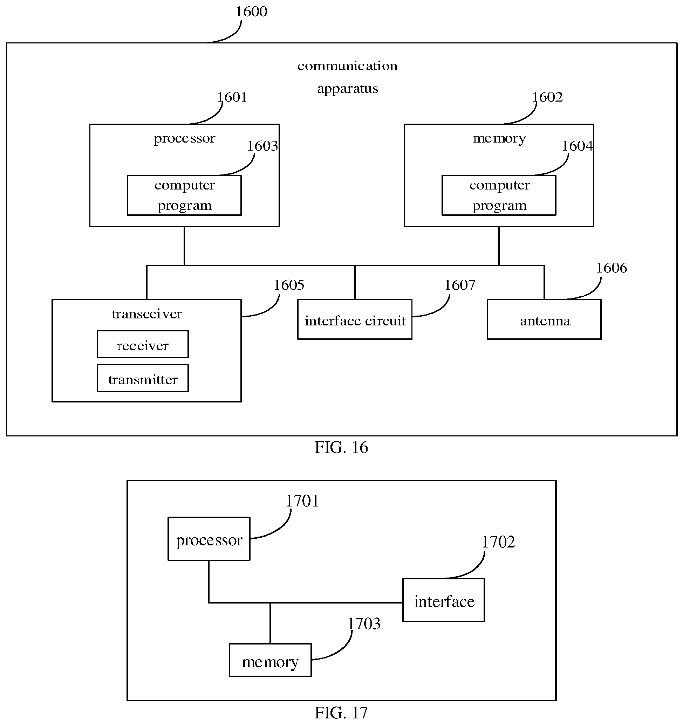

Please refer to FIG. 16, FIG. 16 is a block diagram of another communication apparatus 1600 according to an embodiment of the present disclosure. The communication apparatus 1600 may be a network device, a terminal, or a chip, a chip system, or a processor, etc., that supports the network device to realize the above methods, or a chip, a chip system, or a processor, etc., that supports the terminal to realize the above methods. The apparatus can be used to realize the methods in the method embodiments. For details, please refer to the description in the method embodiments.

The communication apparatus 1600 may include one or more processors 1601. The processor 1601 can be a general-purpose processor or a special-purpose processor, for example, a baseband processor or a central processing unit. The baseband processor can be used to process the communication protocol and communication data, and the central processing unit can be used to control the communication apparatus (such as a base station, a baseband chip, a terminal, a terminal chip, a DU or CU, etc.), execute the computer program, and process the data of the computer program.

Optionally, the communication apparatus 1600 may also include one or more memories 1602 for storing a computer program 1604. When the computer program 1604 is executed by the processor 1601, the communication apparatus 1600 is caused to perform the methods in the above method embodiments. Optionally, data may also be stored in the memory 1602. The communication apparatus 1600 and the memory 1602 can be separate or integrated.

Optionally, the communication apparatus 1600 may also include a transceiver 1605, and an antenna 1606. The transceiver 1605 can be called a transceiver unit, a transceiving machine, or a transceiver circuit, etc., to realize the transmitting and receiving function. The transceiver 1605 may include a receiver and a transmitter. The receiver may be called a receiving machine or a receiving circuit, etc., to realize the receiving function, and the transmitter can be called a transmitting machine or a transmitting circuit, etc., to realize the transmitting function.

Optionally, the communication apparatus 1600 may also include one or more interface circuits 1607. The interface circuit 1607 is configured to receive code instructions and transmit the code instructions to the processor 1601. The processor 1601 runs code instructions to cause the communication apparatus 1600 to perform the methods in the above method embodiments.

In an implementation, the processor 1601 may include a transceiver for implementing receiving and transmitting function. For example, the transceiver can be a transceiver circuit, or an interface, or an interface circuit. The transceiver circuit, interface, or interface circuit used to implement the receiving and transmitting function can be separate or integrated. The transceiver circuit, interface, or interface circuit may be used for reading and writing code/data, or the transceiver circuit, interface, or interface circuit may be used for the transmission or transfer of signals.

In an implementation, a computer program 1603 may be stored on the processor 1601. When the computer program 1603 is running on the processor 1601, the communication apparatus 1600 is caused to perform the methods in the above method embodiments. The computer program 1603 may be solidified in the processor 1601. In this case, the processor 1601 may be implemented by a hardware.

In an implementation, the communication apparatus 1600 includes a circuit that can implement the sending or receiving or communicating function in the above method embodiments. The processor and transceiver in the present disclosure can be implemented in an integrated circuit (IC), an analog IC, a radio frequency integrated circuit (RFIC), a mixed-signal IC, an application specific integrated circuit (ASIC), a printed circuit board (PCB), an electronic device, etc. The processor and transceiver can also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal (such as the terminal in the method embodiments), but the scope of the communication apparatus in the present disclosure is not limited to this, and the structure of the communication apparatus may not be limited by FIG. 16. The communication apparatus can be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) a module embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For a case that the communication apparatus may be a chip or a chip system, refer to a schematic structural diagram of the chip shown in FIG. 17. The chip shown in FIG. 17 includes a processor 1701 and an interface 1702, in which the number of the processors 1701 may be one or more, and the number of the interfaces 1702 may be multiple.

Optionally, the chip further includes a memory 1703, and the memory 1703 is configured to store necessary computer programs and data.

Those skilled in the art may further understand that various illustrative logical blocks and steps listed in the embodiments of the present disclosure may be implemented by electronic hardware, computer software, or a combination of the two. Whether such functionality is implemented by hardware or software depends upon the particular application and design requirements of the overall system. A person skilled in the art may use various methods to implement the functions for each particular application, but it should not be understood that the implementation goes beyond the scope of protection of the embodiments of the present disclosure.

The present disclosure further provides a readable storage medium. Instructions are stored on the readable storage medium. When the instructions are executed by a computer, the functions of any one of the foregoing method embodiments are implemented.

The present disclosure further provides a computer program product. When the computer program product is executed by a computer, the functions of any one of the foregoing method embodiments are implemented.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numerical numbers like first and second in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

The correspondence shown in the tables in the present disclosure may be configured, or may be predefined. The value of the information in each table is merely an example, and may be configured as another value, which is not limited in the present disclosure. When the correspondence between the configuration information and the parameters does not need to be configured, all the corresponding relationships shown in the tables must be configured. For example, in the table in the present disclosure, the correspondence shown in some rows may also not be configured. For another example, appropriate deformation adjustment may be performed based on the foregoing tables, for example, splitting, merging, and the like. The names of the parameters in the foregoing tables may also be other names that may be understood by using a communication apparatus, and a value or a representation manner of the parameters may also be understood by a communication apparatus in another value or representation manner. When the foregoing tables are implemented, other data structures may also be used, for example, an array, a queue, a container, a stack, a linear table, a pointer, a linked list, a tree, a graph, a structure, a class, a heap, a hash table, or the like may be used.

The term "predefined" in the present disclosure may be understood as definition, pre-definition, storage, pre-storage, pre-negotiation, pre-configuration, curing, or pre-firing.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

It may be clearly understood by a person skilled in the art that, for the purpose of convenient and brief description, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. An information indication method, performed by a network device, comprising:
acquiring capability information reported by a terminal, wherein the capability information indicates whether the terminal supports reporting a measurement gap requirement for a frequency band; and
sending, in response to the capability information indicating that the terminal supports reporting the measurement gap requirement for the frequency band, indication information to the terminal, wherein the indication information is used to indicate target frequency band information for which the terminal needs to report the measurement gap requirement.

2. The method according to claim 1, wherein the capability information comprises at least one of:
first capability information used to indicate whether the terminal supports reporting a first measurement gap requirement for the frequency band; or
second capability information used to indicate whether the terminal supports reporting a second measurement gap requirement for the frequency band; and
the indication information indicates a target frequency point for which the terminal needs to report the measurement gap requirement, the target frequency point comprising a new radio (NR) target frequency point or a long term evolution (LTE) target frequency point.

3. The method according to claim 2, further comprising:
receiving the measurement gap requirement for the target frequency band reported by the terminal; and
configuring a measurement gap for the terminal based on the measurement gap requirement for the target frequency band.

4. The method according to claim 2, wherein the first measurement gap requirement is a requirement for a measurement gap;
the second measurement gap requirement is a requirement for a measurement gap and a network controlled small gap (NCSG).

5. The method according to claim 2, wherein in response to acquiring the first capability information reported by the terminal, and the first capability information indicating that the terminal supports reporting the first measurement gap requirement for the frequency band, sending the indication information to the terminal comprises:
in a case that the network device is an NR network device, sending to the terminal indication information used to indicate the LTE target frequency band for which the terminal needs to report the measurement gap requirement.

6. The method according to claim 2, wherein in response to acquiring the second capability information reported by the terminal, and the second capability information indicating that the terminal supports reporting the second measurement gap requirement for the frequency band, sending the indication information to the terminal comprises:
in a case that the network device is an LTE network device, sending to the terminal indication information used to indicate the NR target frequency band for which the terminal needs to report the measurement gap requirement.

7. The method according to claim 3, wherein in response to acquiring the first capability information reported by the terminal, and the first capability information indicating that the terminal supports reporting the first measurement gap requirement for the frequency band, the measurement gap requirement for the target frequency band reported by the terminal comprises any one of:
need for a measurement gap;
no need for a measurement gap; or
no need for a measurement gap and no need for an interruption of communication with a current serving cell during a measurement.

8. The method according to claim 3, wherein in response to acquiring the second capability information reported by the terminal, and the second capability information indicating that the terminal supports reporting the second measurement gap requirement for the frequency band, the measurement gap requirement for the target frequency band reported by the terminal comprises any one of:
need for a measurement gap;
need for an NCSG;
no need for a measurement gap and no need for an NCSG; or
no need for an NCSG and no need for an interruption of communication with a current serving cell during a measurement.

9. An information indication method, performed by a terminal, comprising:
reporting capability information to a network device, wherein the capability information indicates whether the terminal supports reporting a measurement gap requirement for a frequency band; and
receiving, in response to the capability information indicating that the terminal supports reporting the measurement gap requirement for the frequency band, indication information sent by the network device, wherein the indication information indicates target frequency band information for which the terminal needs to report the measurement gap requirement.

10. The method according to claim 9, wherein the capability information comprises at least one of:
first capability information used to indicate whether the terminal supports reporting a first measurement gap requirement for the frequency band; or
second capability information used to indicate whether the terminal supports reporting a second measurement gap requirement for the frequency band; and
the indication information indicates a target frequency point for which the terminal needs to report the measurement gap requirement, the target frequency point comprising a new radio (NR) target frequency point or a long term evolution (LTE) target frequency point.

11. The method according to claim 9, further comprising:
reporting the measurement gap requirement for the target frequency band to the network device; and
acquiring a measurement gap configured by the network device.

12. The method according to claim 10, wherein the first measurement gap requirement is a requirement for a measurement gap;
the second measurement gap requirement is a requirement for a measurement gap and a network controlled small gap (NCSG).

13. The method according to claim 10, wherein in response to reporting the first capability information to the network device, and the first capability information indicating that the terminal supports reporting the first measurement gap requirement for the frequency band, receiving the indication information sent by the network device comprises:
receiving indication information that is sent by an NR network device and is used to indicate the LTE target frequency band for which the terminal needs to report the measurement gap requirement.

14. The method according to claim 10, wherein in response to reporting the second capability information to the network device, and the second capability information indicating that the terminal supports reporting the second measurement gap requirement for the frequency band, receiving the indication information sent by the network device comprises:
receiving indication information that is sent by an LTE network device and is used to indicate the NR target frequency band for which the terminal needs to report the measurement gap requirement.

15. The method according to claim 11, wherein in response to reporting the first capability information to the network device, and the first capability information indicates that the terminal supports reporting the first measurement gap requirement for the frequency band, the measurement gap requirement for the target frequency band reported by the terminal comprises any one of:
need for a measurement gap;
no need for a measurement gap; or
no need for a measurement gap and no need for an interruption of communication with a current serving cell during a measurement.

16. The method according to claim 11, wherein in response to reporting the second capability information to the network device, and the second capability information indicating that the terminal supports reporting the second measurement gap requirement for the frequency band, the measurement gap requirement for the target frequency band reported by the terminal comprises any one of:
need for a measurement gap;
need for an NCSG;
no need for a measurement gap and no need for an NCSG; or
no need for an NCSG and no need for an interruption of communication with a current serving cell during a measurement.

17. A communication apparatus, configured in a network device, comprising:
a transceiver module, configured to acquire capability information reported by a terminal, wherein the capability information indicates whether the terminal supports reporting a measurement gap requirement for a frequency band; and
the transceiver module being further configured to send, in response to the capability information indicating that the terminal supports reporting the measurement gap requirement for the frequency band, indication information to the terminal, wherein the indication information is used to indicate target frequency band information for which the terminal needs to report the measurement gap requirement.

18. A communication apparatus, configured in a terminal, comprising:
a transceiver module, configured to report capability information to a network device, wherein the capability information indicates whether the terminal supports reporting a measurement gap requirement for a frequency band; and
the transceiver module being further configured to receive, in response to the capability information indicating that the terminal supports reporting the measurement gap requirement for the frequency band, indication information sent by the network device, wherein the indication information indicates target frequency band information for which the terminal needs to report the measurement gap requirement.

19. A communication apparatus, comprising a processor and a memory, wherein the memory stores a computer program, and the processor executes the computer program stored in the memory, so that the apparatus executes the method according to any one of claims 1 to 8, or the processor executes the computer program stored in the memory, so that the apparatus executes the method according to any one of claims 9 to 16.

20. A communication apparatus, comprising a processor and an interface circuit, wherein
the interface circuit is configured to receive code instructions and transmit the code instructions to the processor; and
the processor is configured to run the code instructions to execute the method according to any one of claims 1 to 8, or configured to run the code instructions to execute the method according to any one of claims 9 to 16.

21. A computer-readable storage medium for storing instructions that, when executed, cause the method according to any one of claims 1 to 8 to be implemented, or when executed, cause the method according to any one of claims 9 to 16 to be implemented.
